# EUROPEAN PATENT APPLICATION

(11) **EP 0 719 700 A2**
(43) Date of publication of application: **03.07.1996**
(21) Application number: 95118651.9
(22) Date of filing: 27.11.1995
(51) Int. Cl.: B62M 3/00

(54) **Bicycle crankset**

(30) Priority: 29.11.1994 US 346029
(71) Applicant: CANNONDALE CORPORATION, Georgetown, Connecticut 06829-0122 (US)
(72) Inventor: Pong, Alex, Langley, Washington, 98260 (US); Pong, Skooks, Freeland, Washington 98249 (US)
(74) Representative: Goetz, Rupert, Dipl.-Ing.

(57) **Abstract**

A bicycle crankset comprises a unitary chain wheel member (10) having a hub portion (20) adapted to be connected to a bottom bracket spindle for rotation therewith about an axis, at least two spoke portions (22, 24, 26) extending radially from the hub portion (20), a crank-attachment arm portion (22) extending radially from the hub portion, and at least two sprocket ring portions (12, 14, 16) of different diameters joined to the spoke portions and the crank-attachment arm portion. A crank member (18) is attached to the crank-attachment arm portion (22) of the chain wheel member (10) solely at a location thereon spaced apart from the hub portion (20).

## Description

### Background of the Invention

A type of bicycle crankset that is widely available from various sources is composed of two or three separate chain rings attached by nuts and screws to each other and to the arms of a spider, which is usually integral with a crank arm. Such a construction has at least two advantages. First, the same spider/crank arm can be assembled with different size chain rings (different numbers of teeth and diameters), which saves some manufacturing costs. Second, if a chain ring is damaged or becomes worn (the latter is unlikely), it is not necessary to replace the whole assembly; the damaged ring can be replaced by disassembling the crankset. On the other hand, the multi-piece design has the disadvantage of requiring relatively large labor costs for assembly and trueing/straightening. Accordingly, the total cost of a multi-part crankset is relatively high.

### Summary of the Invention

An object of the present invention is to provide a lower cost crankset without sacrificing the advantages of being able to readily provide different size chain rings. One aspect of the present invention is the elimination of the tedious assembly process. Another aspect is the assurance of straight and true chain rings without any trueing/straightening procedures being required. Another object is to provide a strong, stiff, light-weight crankset in which the applied loads are borne with high efficiency.

The foregoing objects are attained, in accordance with the present invention, by a bicycle crankset having a hub adapted to be connected to a bottom bracket spindle for rotation therewith about an axis, a plurality of spokes attached to the hub and extending substantially radially with respect to the axis in circumferentially spaced relation to each other, at least two sprocket rings of different diameters joined to the spokes, and a crank member coupled to the hub and sprocket rings. The invention is characterized in that the hub, spokes, and sprocket rings are portions of a unitary chain wheel member, one of the spoke portions also forms a crank-attachment arm portion of the chain wheel member, and the crank member is immovably and detachably affixed to the crank-attachment arm portion of the chain wheel member solely at a location thereon spaced apart from the hub portion.

The manufacture of the chain wheel as a unitary member, in which two or more (generally three) chain ring portions are integral with the hub, eliminates the labor-intensive assembly and trueing processes completely and ensures true and accurate sprocket rings. Attaching the crank member to the chain wheel member is the only assembly step required and takes very little time or effort. The attachment of the crank member to a portion of the chain wheel remote from the hub portion simplifies the arrangement for attaching the chain wheel/crank to the bottom bracket spindle and allows the chain wheel/crank to be smaller and lighter in weight. The crank-attachment arm portion of the chain wheel forms part of the crank, there being overlapping portions of the crank-attachment arm portion and the crank member that share the function of a crank in transmitting torque to the chain wheel and the function of a spoke in supporting the sprocket rings.

In preferred embodiments, the crank-attachment arm portion to which the crank member is attached has a width transverse to the radial direction with respect to the axis sufficiently large to enable it to sustain circumferential torque loads applied to the crank member. The crank member has a boss that is received in a socket in the crank-attachment arm portion, the socket and boss having interengaging peripheral walls which transit the torque loads and other loads in planes perpendicular to the axis between the crank member and the chain wheel member.

The crank member is, preferably, attached to the crank-attachment arm portion by screws passing through holes in the crank-attachment arm portion and threaded into holes in the boss portion of the crank member. Advantageously, there are a first pair of screws spaced apart laterally and on either side of a radial axis of the crank member and proximate to a radially inner end of the socket and a second pair of screws spaced apart laterally and on either side of the radial axis and proximate to a radially outer end of the socket, thereby to provide for sustaining torque loads about the radial axis.

A portion of the crank member coextensive with the boss lies obliquely to a plane perpendicular to the axis of rotation of the crankset. The socket has a first base surface adjacent the first pair of screws and a second base surface adjacent the second pair of screws and the second base surface is offset axially from the first base surface. The geometry of the juncture between the crank member and the chain wheel member set provides a gradual and structurally efficient axial transition between the drive planes of the sprocket ring portions and the radially outward portion of the crank member to which the pedal is attached.

In an exemplary embodiment, the chain wheel member has three sprocket ring portions, including a large diameter sprocket ring portion, an intermediate diameter sprocket ring portion and a small diameter sprocket ring portion. The intermediate diameter sprocket ring portion is part of a first circumferential structural unit that further includes an annular disc portion attached to the spoke portions and having an inner edge spaced apart from the hub portion. The small diameter sprocket ring portion includes an annular ring portion spaced-apart radially from the disc portion and is attached to the disc portion by a flange portion proximate to the inner edge of the disc portion. The large diameter sprocket ring portion is joined to radially outward ends of the spoke portions and the crank-attachment arm portion and is part of a second circumferential structural unit that includes an arch-shaped stiffening web extending radially inwardly from each portion of the large diameter sprocket ring portion between adjacent spoke portions and between the crank attachment portion and each spoke portion adjacent to it and is joined to the respective spoke portions and the crank attachment portion.

For a better understanding of the invention, reference may be made to the following description of an exemplary embodiment, taken in conjunction with the accompanying drawings.

### Description of the Drawings

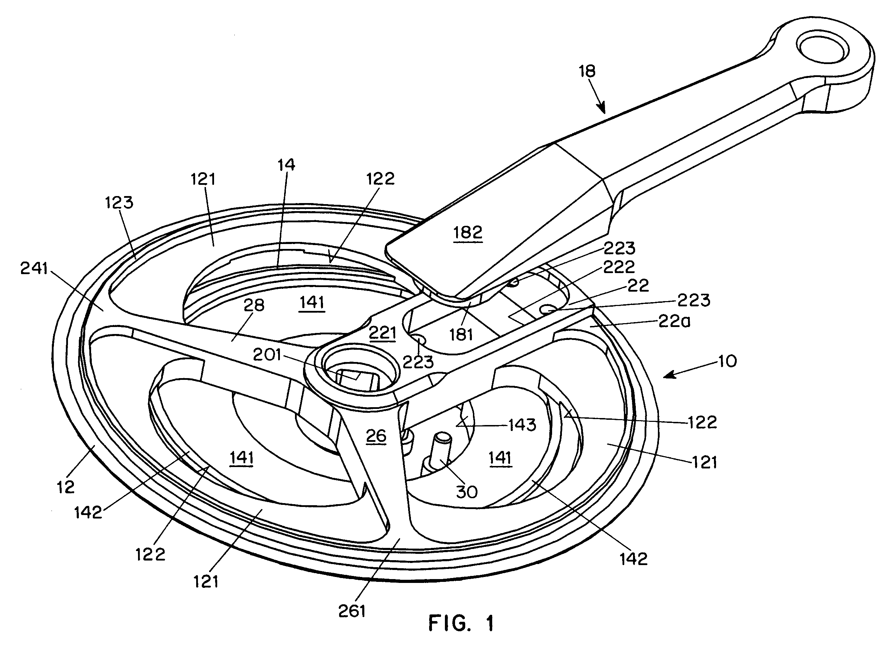

Fig. 1 is an exploded pictorial view of an embodiment of the crankset of the present invention, viewed from a point radially away from the axis of rotation and axially to the crank member side;

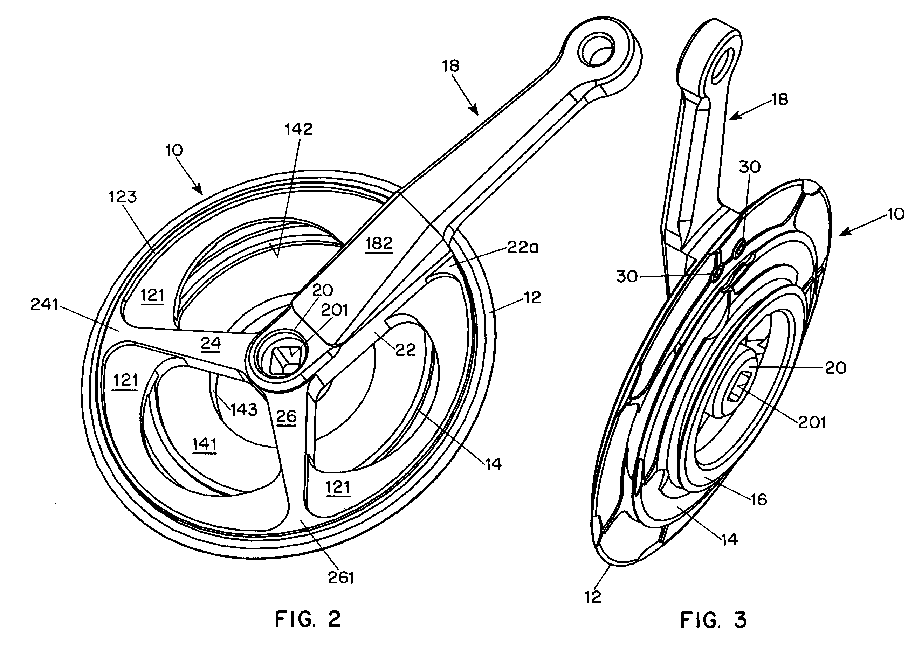

Fig. 2 is a pictorial view of the embodiment, in assembled condition and viewed from a slightly different aspect from that of Fig. 1;
Fig. 3 is a pictorial view of the embodiment, in assembled condition and viewed from radially to one side of the axis and from the side opposite to the crank member side;
Fig. 4 is an exploded elevational view of the embodiment; and
Fig. 5 is a cross-sectional view taken along a plane slightly offset from the axis of rotation of the crankset and the axis of the crank member and generally along the centers of the screws.

### Description of the Embodiment

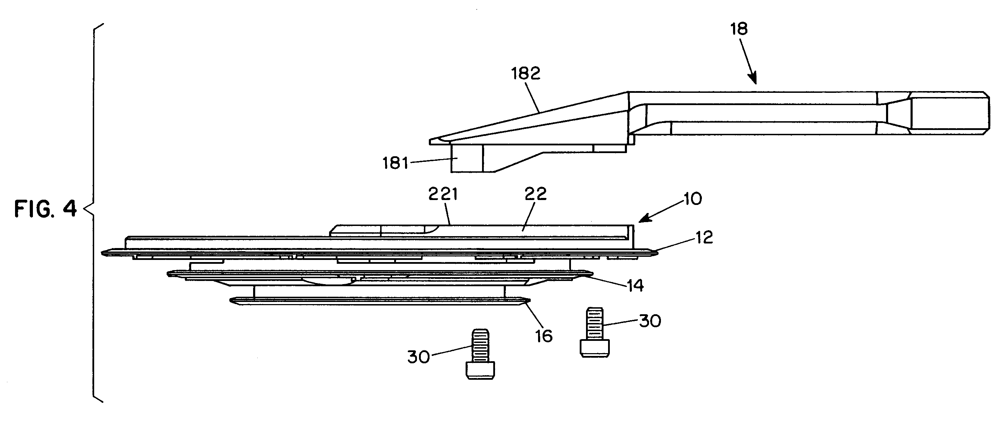

The embodiment shown in the drawings comprises a unitary chain wheel member 10 with multiple chain ring portions 12, 14 and 16 (Figs. 3 and 4) and a crank member 18 attached to the chain wheel member. The chain wheel member 10 has a hub portion 20, which is adapted to be connected to a bottom bracket spindle (not shown) for rotation therewith, such as by a square tapered hole portion 201, about an axis, the aforementioned three sprocket ring portions, which are of different diameters and have different numbers of sprocket teeth (not shown), joined to the hub portion, and a crank-attachment arm portion 22 (which also serves as a third spoke portion of the chain wheel member) joined to and extending generally radially from the hub portion to the outer perimeter of the chain wheel member and joined to the sprocket ring portions. The crank member 18 is attached to the crank-attachment arm portion 22 of the chain wheel member solely at a location spaced apart from the hub portion; it does not extend over or into the hub portion and is not directly attached to the crankset spindle.

Except for the hub portion 20 and the crank-attachment arm portion 22, which are relatively massive in order to meet the strength and stiffness requirements of carrying the pedal forces from the pedals to the bottom bracket shaft, the chain wheel member 10 is composed of portions of relatively small dimensions (either thicknesses or widths), thus minimizing weight, but also formed geometrically and/or integrated structurally to make them strong and stiff as well. Two spoke portions 24 and 26 extend radially out from the hub portion 20. Each spoke portion is of substantially uniform thickness axially and is tapered so as to become narrower in the circumferential direction from the radially inward to the radially outward portions.

The largest sprocket ring portion 12 is attached to the radially outward extremities of the spoke portions 24 and 26 and the attachment arm portion 22 at radiussed junctures 241, 261 and 22a. Arch-like web portions 121 extend radially inwardly from the sprocket ring portion 12 and between the respective adjacent spoke portions 24, 26 and the crank-attachment arm portion 22, leaving pie-shaped openings 122. A circumferential rib portion 123 projects axially from the face of the sprocket ring portion 12 to provide stiffness in the axial direction.

The intermediate sprocket ring portion 14 is integral with an annular disc portion 141 of substantially uniform radial width. A circumferentially extending rib portion 142 projects axially and provides axial stiffness. The inner edge 143 of the disc portion 142 is circular and defines with the hub portion 20 an annular hole that is crossed radially by the spoke portions 24 and 26 and the crank-attachment arm portion 22.

The smallest sprocket ring portion 16 projects from an annular flange portion 161, the radially inner edge surface of which is contiguous with the edge 143 of the disc portion 141. Axial stiffness is imparted to the ring portion 16 by the flange portion 161, which also joins the sprocket portion 16 to the spoke portions 24 and 26 and the crank-attachment arm portion 22 and interconnects the spoke portions and the crank-attachment arm portion circumferentially. Circumferential connections for transmitting torques about the axis and imparting strength and rigidity to the spoke portions and the crank-attachment arm portion are also provided by the disc portion 141 and the arch portions 121.

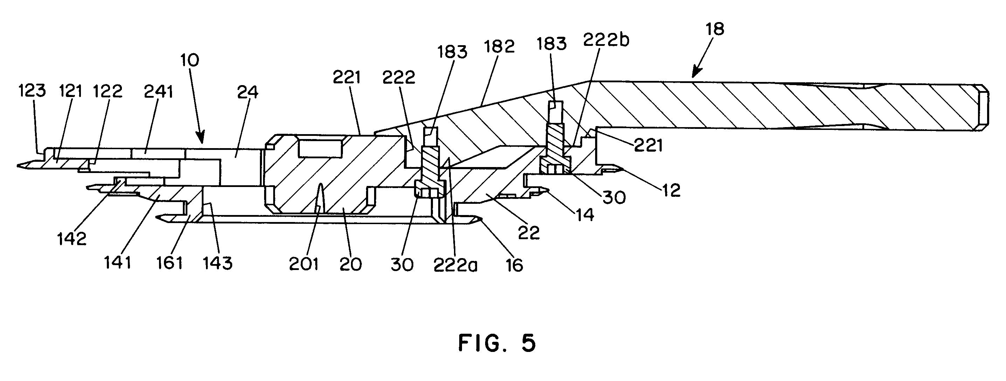

The crank-attachment arm portion 22 of the chain wheel member 10 has a width transverse to its radial axis substantially equal to diameter of the hub portion 20 and has a planar surface 221 perpendicular to the axis and flush with the end of the hub portion 20. A socket 222 having a stepped bottom wall, the inner portion 222a of which is coextensive with the disc portion 141 and the outer portion 222b of which is coextensive with the arch portions 121 on either side of the arm portion 22 (see Fig. 5), receives a boss portion 181 that projects from an attachment portion 182 of the crank member. The perimeter walls of the socket 222 form keying surfaces that mate in a close fit with the perimeter walls of the boss portion to couple the crank member rigidly to the sprocket member 10 in all directions radially and circumferentially; all loads in planes perpendicular to the axis of the crankset are transmitted between the chain wheel member 18 and the sprocket member 10 by the perimeter walls of the socket and boss.

The surface of the attachment portion 182 that faces the sprocket member and surrounds the boss portion 181 is planar and engages the surface 121 of the crank-attachment arm portion 22. The crank member is attached to the chain wheel member by screws 30 that pass through holes 223 in the chain wheel member and thread into threaded holes 183 in the attachment portion 182 of the crank member 18. Note that there are two pairs of screws, a radially inner pair and a radially outer pair, and the holes are widely spaced relative to and on either side of the radial axis of the crank member 18.

The attachment system between the crank-attachment arm portion 22 of the chain wheel member and the attachment portion 18a of the crank member 18 provide high strength and stiffness. The keyed engagement between the boss portion 181 of the crank member 18 and the socket 222 of the chain wheel member sustain load components acting in all directions in planes perpendicular to the axis, especially components of the pedal forces that apply rotational torque to the chain wheel member about the axis of rotation. The screws 30 are not required to carry shear forces. The relative wide spacing laterally of the axis of the crank 18 of the mating surfaces 221 and 182 of the chain wheel and crank, respectively, and of the screws 30 sustain very effectively the torsion loads of the pedal forces about the axis of the crank, the screws acting at large moment arms relative to the crank axis and thus being subject to relatively low tensile stresses. The more or less uniform dimensions in the axial direction (vertically with respect to Fig. 5) along the length of the crank, despite an offset axially between the hub and the outer end of the crank, provide an efficient distribution of loads along the path from the pedals to the bottom bracket spindle for high strength and stiffness but without added weight.

Both the chain wheel and crank are machined from solid blanks of metal, preferably aluminum 6061 T651. The use of modern computer numerically controlled (CNC) machines enables the components to be produced rapidly and with great precision and with virtually no labor costs. The use of CAD-CAM design and manufacturing of the crankset also allows virtually instantaneous changeovers between cranksets with different chain ring diameters and numbers and profiles of sprocket teeth. Similarly, chain wheels with either two or three sprocket rings and cranks of different lengths can be produced with only minor software changes. Assembly of the chain wheel and crank is fast and easy.

## Claims

1. A bicycle crankset having a hub (20) adapted to be connected to a bottom bracket spindle for rotation therewith about an axis, a plurality of spokes (22, 24, 26) attached to the hub and extending substantially radially with respect to the axis in circumferentially spaced relation to each other, at least two sprocket rings (12, 14, 16) of different diameters joined to the spokes, and a crank member (18) coupled to the hub and sprocket rings, characterized in that the hub (20), spokes (22, 24, 26), and sprocket rings (12, 14, 16) are portions of a unitary chain wheel member (10), one of the spokes (22) also forms a crank-attachment arm portion of the chain wheel member (10), and the crank member (18) is immovably and detachably affixed to the crank-attachment arm portion (22) of the chain wheel member (10) solely at a location thereon spaced apart from the hub portion (20).

2. A bicycle crankset according to claim 1 and further characterized in that a portion (221) of the crank-attachment arm portion (22) and a portion (182) of the crank member (18) overlap each other axially along generally radially disposed juncture faces in said location.

3. A bicycle crankset according to claim 1 and further characterized in that the crank-attachment arm portion (22) has a width transverse to the radial direction with respect to the axis that is sufficient to enable the crank-attachment arm portion to sustain circumferential torque loads applied to the crank-attachment arm portion by the crank member (18).

4. A bicycle crankset according to claim 2 and further characterized in that the crank-attachment arm portion (22) has a socket (222) and the crank member (18) has a boss (181) received in the socket, the socket and boss having interengaging peripheral walls so as to sustain circumferential torque loads transmitted between the crank member and the chain wheel member.

5. A bicycle crankset according to claim 4 and further characterized in that the crank member (18) is attached to the crank-attachment arm portion (22) by screws (30) passing through holes (223) in the crank-attachment arm portion and threaded into holes (183) in the boss (181) of the crank member (18).

6. A bicycle crankset according to claim 5 and further characterized in that the screws (30) include a first pair of screws spaced apart laterally of and on either side of a radial axis of the crank member (18) and proximate to a radially inner end of the socket (222) and a second pair of screws spaced apart laterally of and on either side of said radial axis and proximate to a radially outer end of the socket (222), thereby to provide for sustaining torque loads about said radial axis.

7. A bicycle crankset according to claim 6 and further characterized in that a portion (182) of the crank member (18) coextensive with the boss (183) lies obliquely to a plane radially of the axis.

8. A bicycle crankset according to claim 1 and further characterized in that the crank-attachment arm portion (22) has a width transverse to the radial direction with respect to the axis sufficient to enable the crank-attachment arm portion to sustain circumferential torque loads, the crank-attachment arm portion (22) has a socket (222) and the crank member (18) has a boss (181) received in the socket, the socket and boss having interengaging peripheral walls so as to sustain circumferential torque loads, the crank member is attached to the crank-attachment arm portion by screws (30) passing through holes (223) in the crank-attachment arm portion (22) and threaded into holes (183) in the boss (181) of the crank member (18), the screws including a first pair of screws spaced apart laterally of and on either side of a radial axis of the crank member and proximate to a radially inner end of the socket and a second pair of screws spaced apart laterally of and on either side of said radial axis and proximate to a radially outer end of the socket, thereby to provide for sustaining torque loads about said radial axis, and the socket has a first base surface (222a) adjacent the first pair of screws and a second base surface (222b) adjacent the second pair of screws and the second base surface is offset axially from the first base surface.

9. A bicycle crankset according to claim 1 and further characterized in that the chain wheel member (10) has three sprocket ring portions (12, 14, 16) including a large diameter sprocket ring portion (12), an intermediate diameter sprocket ring portion (14) and a small diameter sprocket ring portion (16), and wherein the intermediate diameter sprocket ring portion (14) is part of a first circumferential structural unit that further includes an annular disc portion (141) attached to the spoke portions (22, 24, 26) and to the crank-attachment arm portion (22) and having an inner edge (143) spaced apart from the hub portion (20).

10. A bicycle crankset according to claim 9 and further characterized in that the small diameter sprocket ring portion (16) includes an annular ring portion spaced-apart axially from the disc portion (141) and is attached to the disc portion (141) by a flange portion (143) proximate to the inner edge of the disc portion (141).

11. A bicycle crankset according to claim 9 and further characterized in that the large diameter sprocket ring portion (12) is joined to radially outward ends of the spoke portions (22, 24, 26) and the crank-attachment arm portion (22) and is part of a second circumferential structural unit that includes an arch-shaped stiffening web (121) extending radially inwardly from each portion of the large diameter sprocket ring portion between adjacent spoke portions and between the crank-attachment arm portion and the adjacent spoke portions and attached to the respective spoke portions and crank-attachment arm portion.
